# EUROPEAN PATENT APPLICATION

(11) **EP 2 933 017 A1**
(43) Date of publication of application: **21.10.2015**
(21) Application number: 14165239.6
(22) Date of filing: 17.04.2014
(51) Int. Cl.: B01J 19/00

(54) **ENCODED DEVICE AND METHOD FOR ENCODING AND DECODING REFERENCE AREAS ON A SUBSTRATE**

(71) Applicant: AyoxxA Biosystems GmbH, 50829 Köln (DE)
(72) Inventor: Heup, Torsten, 50129 Fliesteden (DE); Zumbansen, Markus, 50933 Köln (DE)
(74) Representative: Remus, Alvaro Johannes

(57) **Abstract**

The invention relates to a device comprising a substrate 20 having a surface comprising a plurality of discrete sites 21 and at least one reference area 22 wherein each discrete site 21 is configured to hold at least one carrier means. The reference area 22 comprises at least one coding region 24, and the coding region 24 is configured to represent a binary code. The invention further relates to a method for determining the location of a reference area on a substrate 20 having a surface comprising a plurality of discrete sites 21 and at least one reference area 22, wherein at least one image is acquired using reflected or transmitted light from the substrate 20. Both the discrete sites 21 and the reference area 22 are detected within this image, wherein at least one sequence of discrete sites 21 in the reference area 22 is interpreted as a binary code and used to determine the location of the reference area on the substrate 20 by decoding the binary code.

## Description

### Background of the invention

The invention relates to a device comprising a substrate having a surface comprising a plurality of discrete sites and at least one reference area, wherein each site is configured to hold at least one carrier means. The invention further concerns a method for producing a substrate having an encoded surface comprising a plurality of discrete sites and at least one reference area and a method for determining the location of a reference area on a substrate having a surface comprising a plurality of discrete sites and at least one reference area, wherein at least one image is acquired using reflected or transmitted light from the substrate. The invention also relates to a computer program being capable of determining, when running on or loaded into a computer, the location of a reference area on a substrate having a surface comprising a plurality of discrete sites and at least one reference area, wherein at least one image is acquired using reflected or transmitted light from the substrate.

### Prior art

Microarrays are commonly fabricated by locating biomolecules such as DNA, oligonucleotides or proteins onto flat substrates. Known technologies of microarray fabrication are (1) specifying the respective position of the biomolecules prior to their transfer on the substrate ("Ordered biomolecule deposition") and (2) randomly allocating the respective position of the biomolecules on the substrate ("Random biomolecule deposition"). Ordered biomolecule deposition is by far the most common way for microarray production.

In random biomolecule deposition, biomolecule spots are created randomly onto a substrate. Common techniques use, e.g., mixtures of microbeads of different subpopulations. To determine which subpopulation a microbead belongs to ('decoding'), all of the microbeads must be encoded. Technologies to encode microbeads are usually based on their optical properties, e.g., labeling with fluorophores of different color or labeling with micro microbeads carrying different colors.

Basically, there are currently three main approaches for decoding beads, two of which rely on flow cytometers and use multiple marker dyes or combinations of a single marker dye and bead size to determine which bead in an assay correspond to which emitted fluorescence signal in a recorded image. The dyes are added to the beads in addition to the quantification fluorochrome and the intensity of said dyes is used in the analysis to determine which analyte a signal corresponds to. The third approach is a location based approach using two or more reference populations of auto-fluorescent beads that are used as reference positions.

WO 00/47996 A2 discloses automated information processing for decoding of encoded microbeads. The decoding step requires that a first plurality of decoding binding ligands are added to a random array of microbeads comprising immobilized binding ligands and a first data image is created. A fiducial is used to generate a first registered data image. A second plurality of decoding binding ligands are added to the random array of microbeads and a second data image is created. The fiducial is used to generate a second registered data image. A computer system is then used to compare the first and the second registered data images to identify the location of at least two bioactive agents.

US 2006/0041384 A1 discloses a computer system for comparing images generated from randomly ordered bead arrays, wherein the relative position of each site within the array is preserved so as to compare the same site in different images. To this end, reference features, referred to as "markers" or "fiducials" or "registration points", are provided that allow comparison of a site from image to image. These fiducials can be beads with a unique optical signature or fiber elements with a unique shape or optical property. Alternatively, the substrate may have other types of physical fiducials, such as one or more defined edges that have characteristic optical properties that can be either spaced along the edge(s) or comprise the entire edge, or the fiducials may be an inherent characteristic of the array, for example, small irregularities in the sites (features) of the array can be exploited to serve as fiducials.

However, it is a problem of the prior art approaches that the beads are decoded by the user, i.e. the end customer so that the quality of decoding depends on user's hardware setup. The assay itself may also induce effects that affect the decoding, e.g., by increasing the scatter in the marker dyes. Accordingly, there is a chance of assigning beads to the wrong target, which may lead to large measurement errors. This is a major problem with the prior art technologies, especially for those combining a single marker dye with different bead sizes for differentiation.

### Summary of the invention

It is the object of the invention to provide a device and a method for encoding and decoding a substrate, which avoid per-bead decoding errors and significantly reduce the risk of false assignments.

The object is met by a device as initially mentioned, comprising a substrate having a surface comprising a plurality of discrete sites and at least one reference area, wherein the reference area comprises at least one coding region, wherein the coding region is configured to represent a binary code. This solution of the prior art problems ensures correct identification of the reference area in a very reliable procedure. As every reference area on the substrate is unique and clearly identifiable, there is no per-bead decoding error and no risk of false assignments. Advantageously, the reference area can comprise two parts: An easily identifiable generic marker (such as a geometric shape) and the coding region as a variable part. For example, the latter can be formed by the placement or omission of a discrete site next to the generic marker so that the discrete sites may thereby form bits that can be used to encode a binary number. Due to such variable coding regions a specific identification can be assigned to each member of an almost unlimited number of reference areas, wherein using a binary code allows for concise coding regions, a high fault tolerance and both easy and fast data processing. The device according to the invention comprises a very high information density, i.e. provides a plurality of information within a very small area. Moreover, even if the number of beads to evaluate is relatively low, decoding of the substrate is still possible with the same statistical confidence. It is a further advantage of the device according to the invention that production of the carrier means is simplified as no additional marker for identification is required. Decoding errors can be avoided since the quality of the carrier means assignment does not depend on the user's optical setup, e.g., the quality of filters, illumination homogeneity etc., and thus is not an additional source of error. It is another advantage of the device according to the invention that it is even possible to quantify samples with very little or no signal intensity (blanks) which therefore only provide unreliable fluorescent signals, if any. With the help of the digitally encoded reference areas, it is still possible to assign dark regions, or the lack of a signal, to analytes.

According to one particular embodiment of the device according to invention, the reference area may further comprise at least one generic marker. The generic marker may be, e.g., a geometric shape such as a number or a letter or any other sign that can be identified easily. In one embodiment, the generic marker may comprise three dimensional features of the substrate's surface. The three dimensional features may be selected from the group consisting of grids, lines, depressions, wells and gel pad structures. Accordingly, the generic marker is a kind of landmark or point of reference that can be easily detected so that the coding region that is situated adjacent to it can be analyzed. The binary code of the coding region can then be used to identify the reference area and determine its position on the substrate.

In an exemplary embodiment, at least two reference areas are placed on the surface, wherein the distance between two reference areas lies within the range of about 100 µm to about 1,000 µm. For example, the distance between two reference areas may lie within the range of 100 to 800 µm, 100 to 500 µm, 100 to 300 µm, 300 to 1,000 µm, 500 to 1,000 µm, 700 to 1,000 µm, 200 to 800 µm, 300 to 700 µm, or 400 to 600 µm. In order to allow proper determination of the absolute position of any carrier means on the substrate, about 1,000 to about 100,000 reference areas can be provided on the substrate. For example, 1,000 to 75,000, 1,000 to 50,000, 1,000 to 25,000, 1,000 to 10,000, 10,000 to 100,000, 25,000 to 100,000, 50,000 to 100,000, 75,000 to 100,000, 10,000 to 80,000, 25,000 to 75,000, or 40,000 to 60,000 reference areas may be provided on the substrate.

According to one particular embodiment of the device according to the invention, the coding region comprises a sequence of discrete sites, wherein this sequence comprises at least one omission of a site. Accordingly, the device can be easily produced without adding any identifiers or other elements to the substrate, but merely by defined omission of one or more discrete sites. For example, the binary code can be established such that an existing site represents 1 and an omitted site represents 0. That is, the reference area can comprise an easily identifiable generic marker (such as a geometric shape) and the coding region as a variable part. The coding region may be formed by the placement or omission of discrete sites next to a generic marker. In this case, a placed site at a defined position relative to the generic marker is interpreted as a 1 and an omission as a 0. The discrete sites thereby form bits that can be used to encode a binary number. The number of bits used depends on the size of the device and the number of required unique reference areas.

According to the invention, the binary code can code, e.g., a number, a check sum (proof total), a sequence of letters, a symbol and/or an instruction. For example, if a check sum is coded by the binary code in addition to a number assigned to a generic marker, such check sum avoids misinterpretation of the reference area, e.g., if a carrier means is present at the place of an omitted discrete site (which would then be interpreted as "1" instead of "0"). Such measure further increases the confidence of the decoding of the substrate.

The device according to the invention comprises at least one substrate. The substrate can be a solid support and may be selected from the group consisting of silicon, plastic, glass, ceramic, rubber, polymer or a composite thereof. Exemplary substrates are selected from the group consisting of silicon, modified silicon, glass and modified or functionalized glass, inorganic glasses, plastics, acrylics, polystyrene and copolymers of styrene, polypropylene, polyethylene, polybutylene, polyurethanes, Teflon, polysaccharides, nylon, nitrocellulose, resins, silica, silica-based materials, carbon and metals. In one embodiment, the substrate is silicon, or silicon dioxide or silicon nitride. In another embodiment, the substrate comprises a surface that is hydrophobic or hydrophilic.

The discrete sites may be formed by three dimensional features on the surface of the substrate. The three dimensional features may be selected from the group consisting of grids, lines, depressions, wells and gel pad structures. Those features are well-suited to facilitate retention of the carrier means on the substrate.

Basically, any carrier means that is suitable to be placed on a substrate, in particular a microarray or biochip, may be included in the device according to the invention. For example, the carrier means can be a microsphere or microbead. Exemplary microbeads are formed of material selected from synthetic materials, ceramics, glass, polystyrene, methylstyrene, acrylic polymers, paramagneticmaterials, thoria sol, carbon graphited, titanium dioxide, latex or cross-linked dextrans such as sepharose, cellulose, nylon, cross-linked micelles and teflon. In one embodiment, the microbeads may be irregularly shaped microbeads or regularly shaped microbeads. The microbeads may also have a shape selected from the group consisting of microspheres, microcapsules, microrods, microcubes and microtubes. If a large surface area is desired, the microbeads may also be porous.

The carrier means may range in size range from about 100 nm to about 500 µm. For example, the carrier means sizes may range from 1 µm to 300 µm, 1 µm to 100 µm, 1 µm to 50 µm, 1 µm to 20 µm, 1 µm to 10 µm, 1 µm to 7,5 µm, 1 µm to 5 µm, 1 µm to 2,5 µm, 2,5 µm to 10 µm, 5 µm to 10 µm, 7,5 µm to 10 µm, 2 µm to 8 µm, 4 µm to 6 µm, 1 µm to 500 µm, 10 µm to 500 µm, 50 µm to 500 µm, 100 µm to 500 µm, 300 µm to 500 µm, 1 µm to 400 µm, 10 µm to 300 µm, or 100 µm to 200 µm. The carrier means may be comprised of a plurality of active agents that are attached to, or incorporated within, the carrier means structure. In one embodiment, each carrier means comprises a single type of bioactive agent.

In one embodiment, a plurality of carrier means is placed randomly across the substrate, especially in order to form a random array.

The carrier means may comprise at least one active agent capable of specific binding with at least one target analyte. The bioactive agent may either be synthesized directly on the carrier means, or they may be made and then attached after synthesis. In one embodiment, linkers are employed to attach the bioactive agents to the carrier means, to provide better attachment, improve interaction with the target molecule due to the increased flexibility, and to reduce undesirable or non-specific binding. Each carrier means may be comprised of a plurality of active agents that are attached to, or incorporated within, the carrier means structure. In one embodiment, each carrier means comprises a single type of bioactive agent. A single fluorescent marker can be coupled to a distinct target analyte.

In one embodiment, the bioactive agents that are attached to said carrier means may be selected from the group consisting of organic and inorganic compounds. The bioactive agents may be organic compounds. In another embodiment, the bioactive agents are proteins. The proteins may be naturally occurring proteins or synthetically synthesized proteins. In another embodiment, the bioactive agents are nucleic acids. The nucleic acid may be naturally occurring or synthetically synthesized. The nucleic acid may be single stranded or double stranded or contain portions of both double stranded or single stranded sequence. The nucleic acid may be DNA, both genomic and cDNA, RNA or a hybrid. Moreover, exemplary bioactive agents may include oligopeptides, small organic molecules, coordination complexes, cells, cell fragments, virus particles, antigens, polysaccharides and polynucleotides.

In a one embodiment, the target analyte may be an organic or inorganic molecule. The target analyte may be selected from the group consisting of a nucleic acid, a protein, a lipid moiety, a carbohydrate moiety, an enzyme, an antibody and an antigen. In another embodiment, the target analyte is selected from the group consisting of environmental pollutants (including pesticides, insecticides, toxins, etc.); a chemical (including solvents, polymers, organic materials, etc.); therapeutic molecules (including therapeutic and abused drugs, antibiotics, etc.); biomolecules (including hormones, cytokines, proteins, nucleic acids, lipids, carbohydrates, cellular membrane antigens and receptors (neural, hormonal, nutrient, and cell surface receptors) or their ligands, etc); whole cells (including procaryotic (such as pathogenic bacteria) and eukaryotic cells, including mammalian tumor cells); viruses (including retroviruses, herpesviruses, adenoviruses, lentiviruses, etc.); and spores. The target analytes may be nucleic acids (including oligonucleotides and polynucleotides) and proteins (including immunoglobulins; enzymes, hormones and cytokines). The specific binding of the target analyte to the bioactive agent may be dependent on chemical interactions selected from the group consisting of electrostatic interaction, ionic bonds, covalent bonds, hydrogen bonds and dipole-dipole interactions.

If the device according to the invention is being used to analyze a sample potentially containing a target analyte, an optical marker may be added to at least one of the carrier means and the target analyte. For example, the optical marker can be used for the identification of the carrier means and subsequently the bioactive agents on the carrier means. The optical marker may exhibit an optical change when the active agent is bound to the target analyte. In one embodiment, the optical marker is applied after the sample containing said target analytes have bound to the active agents of the carrier means. The optical marker may be conjugated on the target analyte which in turn binds to the corresponding bioactive agent on the carrier means. The optical marker may be directly conjugated to the target analyte or indirectly conjugated to the target analyte by means of a linker molecule. In one embodiment, the optical marker may be a mixture of reporter dyes, preferably fluorescent.

This process may comprise the step of detecting the optical markers coupled to the carrier means and/or the target analyte with a detector, such as an optical detector. The optical detector may send a signal to a computer memory which is then accessed by a computer processor for generating an image file. Data associated with the image file including information which carrier means exhibit the optical signature, are then compared with the data of the encoding/decoding data table. Those carrier means which exhibit the optical marker are those which have bound with the target analyte. Because the location of the carrier means relative to the reference area is linked to the active agent for the subpopulation via the encoding/decoding data table, it is possible to identify the target analytes in the sample.

For example, the device according to the invention can be used as a microarray system for identifying the presence of one or more target analytes in a sample, said system comprising a random population of carrier means disposed on a surface of a substrate having at least one reference area, said population being comprised of at least two sub-populations each comprising a known active agent capable of specific binding with at least one target analyte, wherein said subpopulations had been deposited sequentially and at discrete periods of each other, a memory recording the location of each carrier means and its respective subpopulation relative to said at least one reference area, said location of each carrier means and its respective subpopulation having been determined by comparison of images of said carrier means between said sequential discrete deposition periods, a detector to detect changes in the said carrier means upon contact with said sample, and a processor responsive to program instructions to interrogate said memory and to compare data received from said detector to identify the presence of said one or more target analytes in said sample based on the location of each carrier means and its respective subpopulation.

The object of the invention is further met by a method for producing a substrate having an encoded surface comprising a plurality of discrete sites and at least one reference area, wherein at least one coding region is generated in the reference area by modifying the surface such that the coding region represents a binary code. It is an advantage of the method according to the invention that production of the carrier means is simplified as no additional marker for identification is required, effectively eliminating one possible source of error. The method further ensures lower cost for end customers since only one fluorescence filter set is needed for detection rather than two or three.

According to one embodiment, the coding region is generated by modifying at least one sequence of discrete sites. For example, the sequence of discrete sites can be modified by omitting at least one site. The device according to the invention can thus be easily produced without adding any identifiers or other elements to the substrate, but merely by defined omission of one or more discrete sites. For example, the binary code can be established such that an existing site represents 1 and an omitted site represents 0.

The object of the invention is also met by a method for determining the location of a reference area on a substrate having a surface comprising a plurality of discrete sites and at least one reference area, wherein at least one image is acquired using reflected or transmitted light from the substrate, both the discrete sites and the reference area are detected within this image, and at least one sequence of discrete sites in the reference area is interpreted as a binary code and used to determine the location of the reference area on the substrate by decoding the binary code. By using the location of the reference area, the absolute position of the image on the substrate can be easily determined. Thus, the method according to the invention is an advantageous approach to determine which carrier means, i.e. each carrier means reacting to a single target analyte, in an assay corresponds to which emitted detectable signal in a recorded image. In this method the signal's position relative to a set of reference areas is determined. Each of those reference areas is unique and encoded by the binary code. For every reference area, a map of the relative coordinates (in the surrounding area) of placed carrier means (and thereby analytes) is created during production of the substrate. This map is saved and may be delivered along with the substrate. An analysis software then matches the map with the assay images taken by the user.

The object of the invention is further met by a computer program being capable of determining, when running on or loaded into a computer, the location of a reference area on a substrate having a surface comprising a plurality of discrete sites and at least one reference area, wherein at least one image is acquired using reflected or transmitted light from the substrate, and wherein the program comprises an algorithm detecting both the reference area and the discrete sites within the image and interpreting the discrete sites in the reference area as a binary code, wherein the algorithm uses said code to determine the location of the reference area on the substrate by decoding the binary code. By using the location of the reference area, the absolute position of the image on the substrate can be easily determined.

Moreover, the object of the invention is further met by a method for differentiating and quantifying multiple target analytes within a sample, comprising the acquisition of a first image using reflected or transmitted light from the device according to the invention as described above, detecting the reference area as well as the discrete sites within the first image, interpreting the discrete sites in the reference area as a binary code, using said code to determine the location of the reference area and thus the absolute position of the first image on the substrate, the acquisition of a second image using at least one fluorescent signal emitted by at least one carrier means held in a particular discrete site, wherein the carrier means comprises at least one active agent capable of specific binding with at least one target analyte, loading a predefined map matching coordinates to at least one target analyte, and using the position of the carrier means relative to the reference area to assign each fluorescent signal to the target analyte expected at that particular discrete site. It is an advantage of this method that it is even possible to quantify samples with very little or no signal intensity (blanks), which therefore only provide unreliable fluorescent signals, if any. With the help of the digitally encoded reference areas, it is still possible to assign dark regions, or the lack of a signal, to analytes.

For example, the method according to the invention may comprise the step of recording the position of each attached carrier means, e.g., microbead, relative to the reference area. The recording may be undertaken in the memory of a computer. The position of each microbead relative to the reference area may be recorded as data in the computer memory in the form of data table containing the spatial position of each single microbead and its corresponding subpopulation (hereafter called the "encoding/decoding data table"). Hence the encoding/decoding data table encodes the position of the microbeads and their respective subpopulation on the substrate and can be used as a decode tool to determine the position of the microbeads and their respective subpopulation on the substrate with reference to the reference area. Each subpopulation has its own unique known active agent on the microbeads and thereby its ability to detect a particular target analyte that may be in a sample. Advantageously, the position and identifier data associated with each microbead may be recorded in the encoding/decoding data table in the memory of the computer. It can therefore be readily accessed by a processor acting under instructions of a computer program to decode the microarray by determining the position of the microbeads and their functionality relative to the reference area. The computer readable memory may comprise an acquisition module that may comprise a computer code that can receive a data image from a random array and a registration module comprising a computer code that can register the data image using at least one reference area to generate a registered data image. The registered data image may be stored in a storage module as needed. The same computer code, or different code, may be used to receive additional data images and generate additional registered data images, which may also be stored. For example, the computer readable memory may further comprise a comparison module comprising a computer code that can compare the registered data images to determine the differences between them, to allow both decoding of the array and target analyte detection. The comparison of at least two registered data images allows the identification of the location of at least two unique bioactive agents on the array. For example, the registered data image between a first subpopulation (data set "RDI-1 ") and a second sequential subpopulation (data set "RDI-2") are compared. Those new microbeads located in RDI-2 that were not present in RDI-1 are determined to be from the second sequential subpopulation and those that were present in RDI-1 but not RDI-2 are determined to be from the first subpopulation. Likewise, subsequent subpopulation images are compared and assigned to their respective subpopulation groups. The data indicating the position and known active agent of each subpopulations 1, 2, ..., n are compiled into the encoding/decoding data table.

The terms "array" and "microarray" as used herein refer to an arrangement of a plurality of carrier means on a solid substrate that has minor dimensions.

The term "random array" as used herein refers to an array that is manufactured such that each carrier means is arbitrarily deposited on the substrate in a generally non-reproducible manner.

The term "carrier means" as used herein refers to a solid material that is capable of carrying and/or binding particles or molecules in order to immobilize these particles or molecules. Active agents may be attached to, or incorporated within, the carrier means structure/material.

The terms "microbead" and "microsphere" as used herein refer to a micrometer sized discrete carrier means in the range of about 0.1 microns to about 1000 microns in diameter.

The term "population" as used herein refers to the total universe of carrier means deposited on a microarray. The term "subpopulation" as used herein refers to a group of carrier means within the population that all comprise the same active agent.

The term "active agent" as used herein refers to any chemical agent or biological agent that is capable of reacting with a target analyte or an intermediary bound to the target analyte. The active agent may exhibit biological activity and may be referred to in the specification as a "bioactive agent". The active agent can be attached or bonded to the carrier means, wherein each carrier means comprises a selected, bioactive agent capable of binding with one or more target analytes.

The term "target analyte" as used herein refers to a substance to be detected that is capable of binding to an active agent.

Unless specified otherwise, the terms "comprising" and "comprise", and grammatical variants thereof, are intended to represent "open" or "inclusive" language such that they include recited elements but also permit inclusion of additional, unrecited elements.

As used herein, the term "about" typically means +/-5% of the stated value, more typically +/-4% of the stated value, more typically +/-3% of the stated value, more typically, +/-2% of the stated value, even more typically +/-1% of the stated value, and even more typically +/-0.5% of the stated value.

The invention is further described in detail with reference to the figures.

### Brief description of the drawings

**Figure 1** shows a plan view of a detail of one embodiment of a device according to the invention.
**Figure 2** shows a plan view of another detail of the embodiment according to Figure 1.
**Figure 3** shows a plan view of a detail of another embodiment of a device according to the invention.

### Description of exemplary and preferred embodiments of the invention

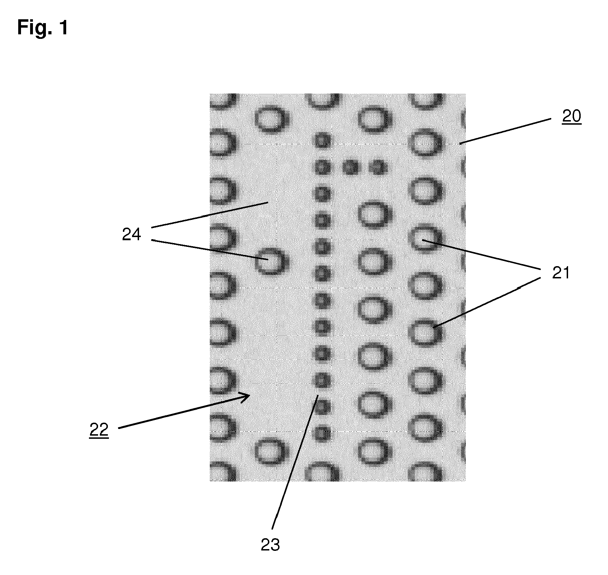

**Figure 1** shows a detail of one embodiment of a device according to the invention comprising a substrate 20 which comprises a plurality of discrete sites 21 on its surface. In this embodiment, the discrete sites 21 are small wells that are incorporated, e.g. etched, into the surface of the substrate 20. Each discrete site 21 is designed and sized to hold one carrier means. The substrate 20 further comprises a reference area 22 comprising a generic marker 23 and a coding region 24 situated adjacent to the generic marker 23. In this representation, the coding region 24 extends along the left side of the generic marker 23. The generic marker 23 is a geometric shape, i.e. a number ("1 "), formed by single dots that are printed onto or etched into the surface of the substrate 20. According to the invention the generic marker 23 is used to determine the rotation of the substrate 20 and hence the device according to the invention. The coding region 24 represents the variant part of the reference area 22 and comprises an area corresponding to a series of eight consecutive discrete sites, wherein some of the discrete sites 21 are present and some of the sites are omitted. In this example, the binary code is established such that an existing site represents 1 and an omitted site represents 0, so as to provide a binary code comprising a number of 2⁸ = 256 bits. The present and omitted sites (read from bottom to top in this representation) form the bits 1000100 1, which means this is reference area no. "137". The number of bits used can be easily adapted to the size of the substrate 20 and the number of required unique reference areas 22.

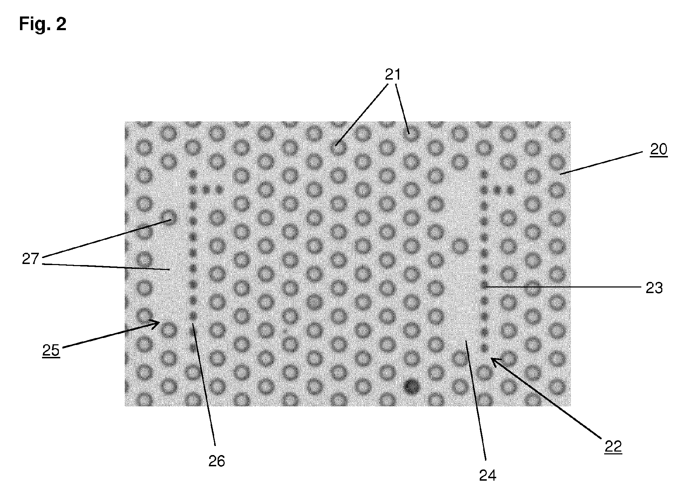

**Figure 2** shows a plan view of another detail of the embodiment according to Figure 1. In this figure a second reference area 25 left of the reference area 22 is shown. The second reference area 25 includes a generic marker 26 similar to the generic marker 23 of reference area 22 and a coding region 27 representing a second binary code by means of a configuration similar to the one of the coding region 24 of reference area 22. The present and omitted sites (read from bottom to top in this representation) of the coding region 27 form the bits 1 1 0 0 0101, which means this is reference area no. "98".

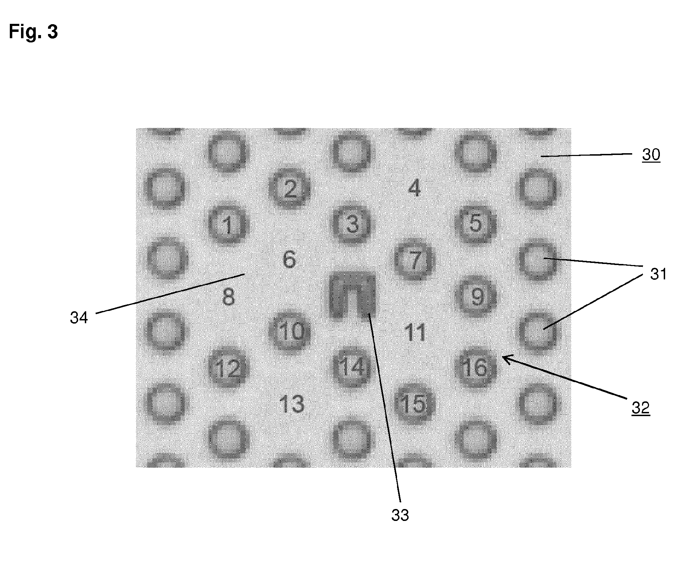

**Figure 3** shows a plan view of a detail of another embodiment of a device according to the invention comprising a substrate 30 which comprises a plurality of discrete sites 31 on its surface. In this embodiment, the discrete sites 31 are small wells that are incorporated, e.g. etched, into the surface of the substrate 30. Each discrete site 31 is designed and sized to hold one carrier means. The substrate 30 further comprises a reference area 32 comprising a generic marker 33 and a coding region 34 situated around the generic marker 33. In this representation, the coding region 34 is a circular area extending around the generic marker 33. The generic marker 33 is a geometric shape (similar to the letter "n") printed onto or etched into the surface of the substrate 30. According to the invention the generic marker 33 is used to determine the rotation of the substrate 30 and hence the device according to the invention. The coding region 34 represents the variant part of the reference area 32 and comprises an area corresponding to sixteen discrete sites (marked with numbers 1 to 16 in this representation), wherein some of the discrete sites 31 are present and some of the sites are omitted. In this example, the binary code is established such that an existing site represents 0 and an omitted site represents 1, so as to provide a binary code comprising a number of 2¹⁶ = 65,536 bits. The present and omitted sites (read in ascending order of numbers 1 to 16 in this representation) form the bits 0001010100101000.

### Example

In order to determine the required number of reference areas on the substrate, it is assumed that 1mm² is a typical field of view (FOV) for most microscope cameras. Since reference areas can become damaged or occluded, it should be ensured that at least 4 reference areas are visible in any given FOV. Therefore, reference areas should be placed every 400µm on the substrate. Assuming a typical microscope slide of 75x25mm, a number of 11,844 reference areas are required to be placed on the substrate. For a 384-well plate (100x75mm) 47,000 reference areas are required. Therefore, the binary number used to encode the reference areas has to have at least 16bit (== ceil(log₂(47000)).

The generic markers should be in the same size range as the discrete sites, i.e. microwells. Ideally they should cover the same area as 1 to 10 microwells. For example, the generic marker would then cover between 10 and 100µm. The structure size (width of lines) should be above 1 µm.

Assuming that all discrete sites around a generic marker or adjacent to a generic marker can potentially be bits, the marker has to follow a shape with a uniquely identifiable orientation, regardless of rotation.

It is an advantage of the present invention that the production of the carrier means to be used with the device according to the invention is simplified since the invented method only requires carrier means to carry a single dye for quantification but not any additional marker dyes. This also eliminates possible sources of errors, e.g., due to variations in the dyeing process. Since the generic markers can be etched into the substrate, no second processing step is required for adding the generic markers. Furthermore, the fact that the generic markers are actually etched into the surface of the substrate in the same step as the discrete sites means that the reference areas have a very high precision, and that a further possible source of error (as the deposition of reference beads might cause) can be avoided.

Some prior art approaches decode beads at the end customer, e.g., in the flow cytometer. The quality of the decoding therefore depends on the customer's hardware setup. The assay itself may also induce effects that affect the decoding, e.g., by increasing the scatter in the marker dyes. There is a chance of assigning beads to the wrong target, which may lead to large measurement errors. This is actually a major problem with at least some of the prior art technologies, especially for those combining a single marker dye with different bead sizes for differentiation. The method according to the invention relies only on correctly identifying the reference areas, which is a very reliable procedure. There is no per-bead decoding error and no risk of false assignments. Hence, even if there was only a smaller number of beads to evaluate, there would be still a high statistical confidence.

It is a further advantage of the present invention that decoding via reference areas allows for using only two images (brightfield + quantification fluorescence), which can be done with a single filter. The requirements for the user's setup are therefore very low, especially since no filter switch devices are required. Comparably cheap and simple microscopes can be used for the evaluation.

There is always a chance of a device being handled incorrectly, mixing up results. This is a major concern for health care applications. The method and device according to the invention provide a kind of 'inherent quality control' as it prevents human error in some cases:
(1) Images can be assigned to the wrong substrate: Since the reference areas of the device according to the invention are unique (within one substrate), this potential error can be avoided.
(2) Entire substrates may be mixed up: Since both the reference areas and a decoding table are present, every substrate has a unique signature, so this case will always be identified.

## Claims

1. A device comprising a substrate (20, 30) having a surface comprising a plurality of discrete sites (21, 31) and at least one reference area (22, 25, 32), wherein each discrete site (21, 31) is configured to hold at least one carrier means, **characterized in that** the reference area (22, 25, 32) comprises at least one coding region (24, 27, 34), wherein the coding region (24, 27, 34) is configured to represent a binary code.

2. The device according to claim 1, wherein the reference area (22, 25, 32) further comprises at least one generic marker (23, 26, 33).

3. The device according to claim 1 or 2, wherein at least two reference areas (22, 25, 32) are placed on the surface, wherein the distance between two reference areas (22, 25, 32) lies within the range of 100 to 1,000 µm.

4. The device according to claim 3, wherein 1,000 to 100,000 reference areas (22, 25, 32) are provided on the substrate.

5. The device according to any one of claims 1 to 4, wherein the coding region (24, 27, 34) comprises a sequence of discrete sites (21, 31), wherein this sequence comprises at least one omission of a site.

6. The device according to claim 5, wherein an existing site represents 1 and an omitted site represents 0 in the binary code.

7. The device according to any one of claims 1 to 6, wherein the binary code codes a number, a check sum, a sequence of letters, a symbol and/or an instruction.

8. The device according to any one of claims 1 to 7, wherein the carrier means is a microsphere or microbead.

9. The device according to any one of claims 1 to 8, wherein a plurality of carrier means is placed randomly across the substrate (20, 30).

10. The device according to any one of claims 1 to 9, wherein the carrier means comprises at least one active agent capable of specific binding with at least one target analyte.

11. A method for producing a substrate (20, 30) having an encoded surface comprising a plurality of discrete sites (21, 31) and at least one reference area (22, 25, 32), **characterized in that** at least one coding region (24, 27, 34) is generated in the reference area (22, 25, 32) by modifying the surface such that the coding region (24, 27, 34) represents a binary code.

12. The method according to claim 11, wherein the coding region (24, 27, 34) is generated by modifying at least one sequence of discrete sites (21, 31).

13. The method according to claim 12, wherein the sequence of discrete sites (21, 31) is modified by omitting at least one site.

14. A method for determining the location of a reference area on a substrate (20, 30) having a surface comprising a plurality of discrete sites (21, 31) and at least one reference area (22, 25, 32), wherein at least one image is acquired using reflected or transmitted light from the substrate (20, 30), **characterized in that** both the discrete sites (21, 31) and the reference area (22, 25, 32) are detected within this image, wherein at least one sequence of discrete sites (21, 31) in the reference area (22, 25, 32) is interpreted as a binary code and used to determine the location of the reference area on the substrate (20, 30) by decoding the binary code.

15. A computer program being capable of determining, when running on or loaded into a computer, the location of a reference area on a substrate (20, 30) having a surface comprising a plurality of discrete sites (21, 31) and at least one reference area (22, 25, 32), wherein at least one image is acquired using reflected or transmitted light from the substrate (20, 30), **characterized in that** the program comprises an algorithm detecting both the reference area (22, 25, 32) and the discrete sites (21, 31) within the image and interpreting the discrete sites (21, 31) in the reference area (22, 25, 32) as a binary code, wherein the algorithm uses said code to determine the location of the reference area (22, 25, 32) on the substrate (20, 30) by decoding the binary code.
